# EUROPEAN PATENT SPECIFICATION

(11) **EP 1 839 964 B1**
(45) Date of publication and mention of the grant of the patent: **08.04.2009**
(21) Application number: 07003065.5
(22) Date of filing: 13.02.2007
(51) Int. Cl.: B60R 21/34

(54) **Pedestrian detecting device, method and computer program product**
Vorrichtung und Verfahren zur Fußgängererfassung sowie Computerprogrammprodukt
Dispositif de détection de piéton, procédé et produit de programme informatique

(30) Priority: 27.03.2006 JP 2006085435
(43) Date of publication of application: 03.10.2007
(73) Proprietor: Mazda Motor Corporation, Aki-gun, Hiroshima 730-8670 (JP)
(72) Inventor: Kawamata, Shiyouta, Aki-gun Hiroshima 730-8670 (JP); Kore, Haruhisa, Aki-gun Hiroshima 730-8670 (JP); Kume, Takanori, Aki-gun Hiroshima 730-8670 (JP)
(74) Representative: Müller-Boré & Partner Patentanwälte

(56) References cited:
- DE-A1- 10 030 421
- DE-C1- 19 817 334
- US-A- 3 898 652
- US-A- 4 779 095
- US-A1- 2004 182 629
- US-B1- 6 281 806

## Description

The present invention relates to a pedestrian detecting device, method and computer program product for a vehicle, and more specifically, relates to a pedestrian detecting device , method and computer program product for a vehicle that detects a pedestrian by picking up a far-infrared image.

A technology of detecting a pedestrian outside a vehicle, particularly, in front of the vehicle, for an assistance of vehicle driving or the like has been recently developed. Japanese Patent Laid-Open Publication No. 2004-266767 discloses a technology of detecting the pedestrian with a far-infrared camera, for example. Also, European Patent Publication No. 15640980 A1 discloses a technology of detecting the pedestrian with a stereo camera and a far-infrared camera.

The detection of the pedestrian with the far-infrared camera is conducted by detecting a difference in temperature between the pedestrian and surrounding structures. Therefore, the pedestrian detection may be properly conducted at night when the temperature of surfaces of the surrounding structures is relatively low.

At daytime, however, especially under the sunshine, the temperature of the surrounding structures, roads and the like goes up and so there is little temperature difference between them and the pedestrian, in general. Accordingly, it may be difficult to detect properly the pedestrian in the daytime.

Also, clothes the pedestrian puts on generally change depending on the season and the like. Thus, a pedestrian image within a far-infrared image may change depending on the kind of clothes of the pedestrian. For example, the pedestrian image with the far-infrared rays may change when the pedestrian puts on a long-sleeve shirt or a short-sleeve shirt.

Further, US 2004/0182629 A1 discloses an apparatus for a vehicle protection of a colliding object including a pedestrian sensor, an air bag unit, a camera for taking a forward image of the vehicle and a monitor disposed in a cabin of the vehicle. In the apparatus, the monitor displays the image taken by the camera when the monitor receives one of the precautionary signal and the collision signal.

US 6,281,806 B1 shows a driver road hazard warning and illumination system. The systems includes an image sensing system having one or more sensors which collect information about the environment in which the vehicle travels. Any of said sensor may be sensitive to visible light, near infrared, far infrared or utilize radar or any other technology suited to a given application.

An object of the present invention is to improve the detection accuracy of the pedestrian with the far-infrared rays even at daytime.

This object is solved according to the invention by the features of the independent claims. Preferred embodiments of the present invention are subject of the independent claims.

According to the present invention, there is provided a pedestrian detecting device for a vehicle, which is or is to be installed in the vehicle, comprising an image pickup device to pick up a long wavelength infrared (IR) and/or far-infrared image outside the vehicle, an environment detecting device to detect at least part of an environment outside the vehicle that influences the long wavelength IR and/or far-infrared image picked up by the image pickup device, a pedestrian-model storing device to store data of a pedestrian model in the long wavelength IR and/or far-infrared image to be picked up by the image pickup device in association with the environment outside the vehicle to be detected by the environment detecting device, an area-candidate extracting device to extract or determine a candidate of an area that contains a pedestrian image from the long wavelength IR and/or far-infrared image picked up by the image pickup device, a pedestrian-model extracting device to extract or determine a specified (predetermined or predeterminable) pedestrian model from the stored data of the pedestrian model that is stored (preferably in a substantially non-volatile manner) in the pedestrian-model storing device, the specified (predetermined or predeterminable) pedestrian model associated with or corresponding to the environment outside the vehicle that is detected by the environment detecting device, and a pedestrian determining device to determine, for a pedestrian detection, whether or not the area candidate contains or corresponds to the pedestrian image, by comparing the area candidate extracted or determined by the area-candidate extracting device to the pedestrian model extracted or determined by the pedestrian-model extracting device, wherein the pedestrian model of the data stored by said pedestrian-model storing device comprises plural part models that are defined by a relative position, and said determination by the pedestrian determining device is conducted based on matching for each of the part models of the pedestrian model.

According to the above-described pedestrian detecting device for a vehicle of the present invention, the pedestrian detection is conducted by a determination of matching of the pedestrian model that is associated with the environment outside the vehicle. Thereby, even at daytime, the detection accuracy of the pedestrian can be improved with the long wavelength IR and/or far-infrared rays and since the matching of each of the part models of the pedestrian is conducted, the detection accuracy of the pedestrian can be further improved..

According to an embodiment of the present invention, the environment detecting device detects at least one of a season, temperature, luminous intensity of sunshine, and sunshine time as the environment outside the vehicle. In general, clothes of the pedestrian or the temperature of skins of the pedestrian change depending on the environment outside the vehicle like these conditions. Thus, a detection of these environment conditions can improve the detection accuracy of the pedestrian.

According to another embodiment of the present invention, the pedestrian-model storing device stores data of an average intensity of long wavelength IR and/or far-infrared rays for (preferably each) part of the pedestrian model, and the determination by the pedestrian determining device is conducted substantially based on matching of each part model of the pedestrian with respect to the average intensity of long wavelength IR and/or far-infrared rays of each of part models. Thereby, since the average intensity of the long wavelength IR and/or far-infrared rays of each of part models is used, the above-described matching can be conducted properly and easily.

According to another embodiment of the present invention, the pedestrian-model storing device stores data of a distribution of intensity of long wavelength IR and/or far-infrared rays for each part of the pedestrian model, and the determination by the pedestrian determining device is conducted based on matching of each part model of the pedestrian with respect to the intensity distribution of long wavelength IR and/or far-infrared rays of each of part models. Thereby, since the intensity distribution of the long wavelength IR and/or far-infrared rays of each of part models is used, the above-described matching can be conducted properly and easily.

According to another embodiment of the present invention, the environment detecting device detects a signal transmitted by an IC tag that is put on clothes of a pedestrian as the environment outside the vehicle, the pedestrian-model storing device stores data of the pedestrian model in the long wavelength IR and/or far-infrared image in association with the signal of the IC tag, and the pedestrian-model extracting device extracts or determines a specified (predetermined or predeterminable) pedestrian model associated with the signal of the IC tag detected by the environment detecting device from the stored data of the pedestrian model stored in the pedestrian-model storing device. Thereby, since the matching is conducted by using the pedestrian model in association with the signal of the IC tag putting on the clothes of the pedestrian, the detection accuracy of the pedestrian can be improved.

According to another embodiment of the present invention, there is further provided a visible-image pickup device to pick up a visible image outside the vehicle, and the pedestrian determining device conducts a pedestrian detection based on the visible image for the area candidate. Thereby, the detection accuracy of the pedestrian can be improved.

According to the invention, there is further provided a pedestrian detecting method for a vehicle, in particular for use with a pedestrian detecting device according to the invention or a preferred embodiment thereof, comprising the following steps:
picking up a long wavelength IR and/or far-infrared image outside the vehicle;
detecting at least part of an environment outside the vehicle that influences the long wavelength IR and/or far-infrared image picked up in the image pickup step;
extracting or determining a candidate of an area that contains a pedestrian image from the long wavelength IR and/or far-infrared image picked in the image pickup step;
extracting or determining a specified (predetermined or predeterminable) pedestrian model from stored data of a pedestrian model that is stored (preferably substantially in a non-volatile manner) in a pedestrian-model storing device, the specified pedestrian model being associated with the environment outside the vehicle that is detected in the environment detecting step; and
determining, for a pedestrian detection, whether or not the area candidate contains the pedestrian image, by comparing the area candidate extracted or determined in the area-candidate extracting step to the pedestrian model extracted or determined in the pedestrian-model extracting step, wherein the pedestrian model of the data stored by said pedestrian-model storing device comprises plural part models that are defined by a relative position, and said step of determining whether or not the area candidate contains the pedestrian image is conducted based on matching for each of the part models of the pedestrian model.

According to a preferred embodiment of the invention, in said environment detecting step at least one of a season, temperature, luminous intensity of sunshine, and sunshine time as the environment outside the vehicle is detected.

According to the invention, there is further provided a computer program product, in particular embodied in a computer-readable storage medium or a signal, comprising computer-readable instructions which, when loaded and executed on a suitable system execute the steps of a pedestrian detecting method for a vehicle according to the invention or a preferred embodiment thereof.

Other features, aspects, and advantages of the present invention will become apparent from the following description that refers to the accompanying drawings.

FIG. **1** is a block diagram showing a structure of a pedestrian detecting device according to an embodiment.

FIG. **2** is a schematic diagram showing a layout of the pedestrian detecting device according to the embodiment in a vehicle.

FIG. **3** is an example of an association between an environment outside the vehicle and a pedestrian model.

FIG. **4** is a flowchart of an operation of the pedestrian detecting device according to the embodiment.

FIG. **5A** is an example of a long wavelength IR and/or far-infrared image, FIG. **5B** is an example of an extracted high-temperature area, and FIG. **5C** is an example of an extracted area candidate.

FIG. **6A** is an example of the pedestrian model, and FIG. **6B** is an example of each part of the area candidate.

FIG. **7** is an example of an association between an IC tag signal and a pedestrian model according to a second embodiment.

Hereinafter, preferred embodiments of a pedestrian detecting device for a vehicle (hereinafter, referred to as "present device") of the present invention referring to the accompanying drawings. It should be understood that even though embodiments are separately described, single features thereof may be combined to additional embodiments.

### EMBODIMENT 1

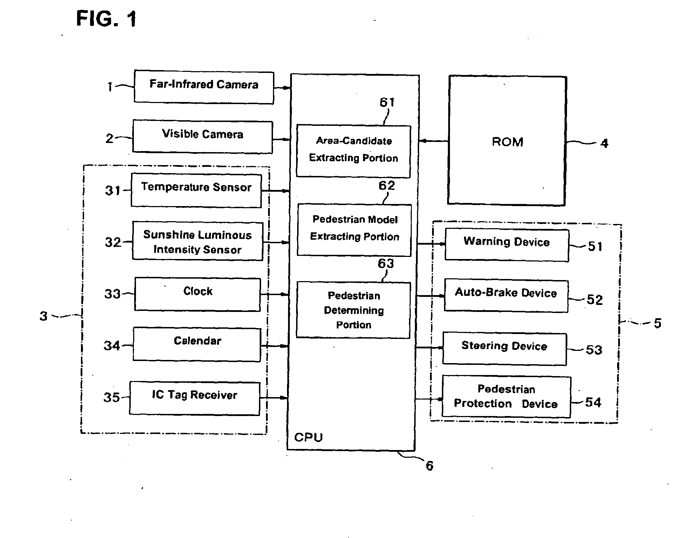

A block diagram of FIG. **1** shows a structure of the pedestrian detecting device for a vehicle according to an embodiment. The present device, as shown in FIG. **1**, comprises a far-infrared camera **1** as an image pickup device to pick up a long wavelength IR or far-infrared image (preferably in a wavelength range of about 8 to about 1000 µm, more preferably in a wavelength range of about 8 µm to about 500 µm) outside the vehicle, a visible camera **2** as a visible-image pickup device to pick up a visible image (preferably in a wavelength range of about 380 nm to about 780 nm, more preferably of about 400 to about 700 nm) outside the vehicle, an environment detecting device **3** to at least partly detect an environment outside the vehicle that influences the far-infrared image, a ROM **4** as a preferred pedestrian-model storing device to store data of a pedestrian model in the far-infrared image in association with the environment outside the vehicle, an output device **5,** and a CPU (central processing unit) **6.**

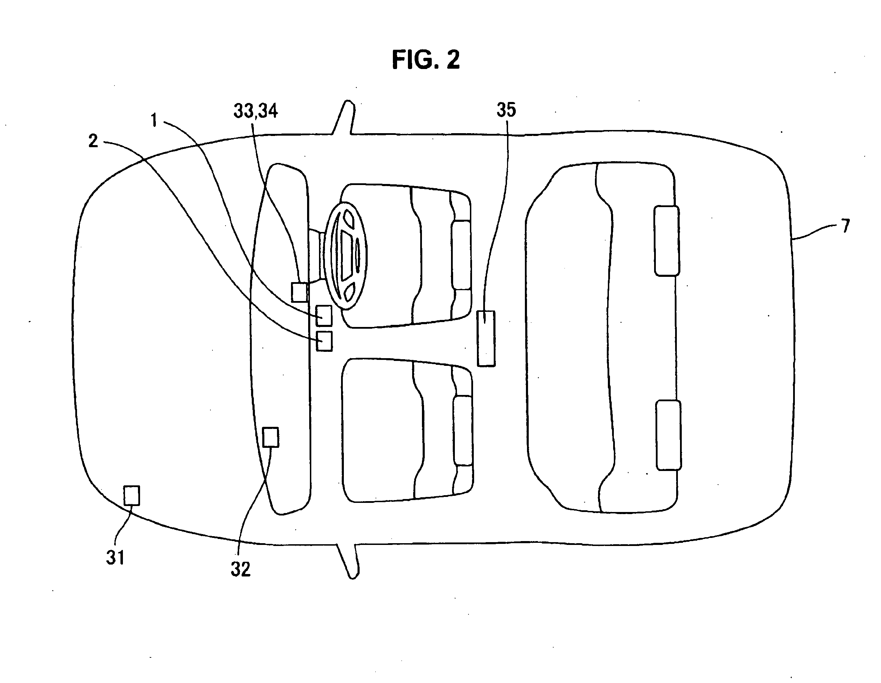

The far-infrared camera **1,** visible camera **2,** and environment detecting device **3** are disposed at respective proper portions in the vehicle **7** as shown in FIG. **2****.** The far-infrared camera **1** and visible camera **2** are located in front or directed to an area in front of the vehicle to pick up images of one or more objects in the present embodiment. The far-infrared camera **1** is a camera operative to pick up an intensity distribution of a heat radiation of the objects more preferably within a long wavelength IR or far infrared wavelength band of about 8 to about 20 µm, still more preferably within a long wavelength IR wavelength band of about 8 to about 15 µm, most preferably within a long wavelength IR wavelength band of about 8 to about 12 µm as the picked-up image.

There are provided a calendar **34** to detect a season, a temperature sensor **31** to detect a temperature outside the vehicle, a sunshine luminous intensity sensor **32** to detect a luminous intensity of sunshine, and/or a clock **33** to detect the time, which are one or more sensors as the preferred environment detecting device **3.** Further, there is provided an IC tag receiver to detect a signal transmitted by an IC tag (not illustrated) that is put on clothes of the pedestrian. The calendar **34** and/or clock **33** may be preferably comprised of an electronic calendar and/or clock installed in a car navigation system, for example. The temperature sensor **31** and/or sunshine luminous intensity sensor **32** may be also comprised of preferable sensor(s). FIG. **2** shows a preferred layout of an antenna for receiving the IC tag signal as the IC tag receiver **25**.

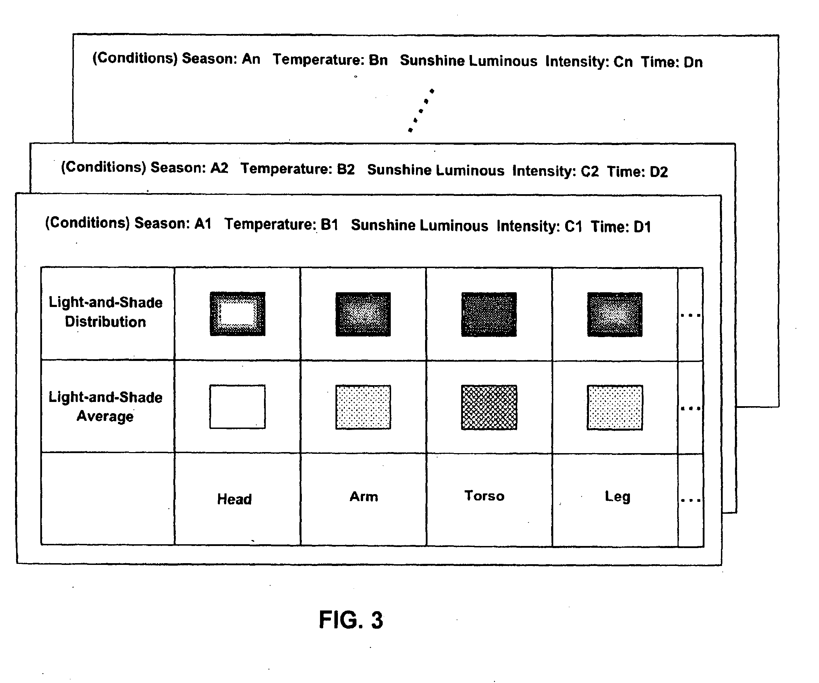

The ROM **4** as the preferred pedestrian-model storing device, as shown in FIG. **3****,** stores (preferably in a substantially non-volatile manner) data of an average intensity of far-infrared rays and a distribution of intensity of far-infrared rays for at least one part, preferably for each part of the pedestrian model (such as a head, arm, torso, leg) preferably in association with environment conditions outside the vehicle of the season (A1-An), temperature (B1-Bn), sunshine luminous intensity (C1- Cn), and/or time (D1-Dn). In FIG. **3****,** a degree of the intensity of far-infrared rays is illustrated as a light and shade for convenience. Herein, a lighter area means an area having a higher intensity, while a darker (shading) area means an area having a lower density.

An average of the light and shade of each part of the pedestrian model is a magnitude that is obtained by averaging the degree of the light and shade in a whole area of (preferably each) part of the pedestrian model. Also, a distribution of the light and shade shows a location change of the light and shade within (preferably each) part of the pedestrian model. Herein, in general, the light and shade of the pedestrian model, i.e., the intensity of far-infrared rays with respect to the heat radiation corresponding to a surface temperature, considerably change depending on whether the pedestrian's skin is covered with the clothes or not (exposed). In the example shown in FIG. **3****,** the average of the light and shade of the head portion including an exposed face is relatively high (light), while the average of the light and shade of the torso portion covered with the clothes is relatively low (dark).

Further, in the example shown in FIG. **3****,** the distribution of the light and shade of each part of the pedestrian model is such that the light and shade at a central portion of each part of the model, i.e., at an area that straightly faces the far-infrared camera, is relatively high, while the light and shade at a peripheral portion of each part of the model, i.e., an area that does not straightly face the far-infrared camera, is relatively low.

Each part of the pedestrian model is defined by a relative position. For example, the head of the pedestrian model is defined as the part that is located above the torso of the pedestrian model, the leg is defined as the part that is located
below the torso, and the arm is defined as the part that is located beside the torso.

The above-described storing of data of the pedestrian model may be configured such that a plurality of pedestrian models are associated with the environment conditions. Also, the above-described location definition of the part models may be configured such that a plurality of definitions are set for a particular pedestrian model.

Further, the data of the part models of the pedestrian model preferably may be stored for several, preferably substantially all of the environment conditions, or some data of only fundamental models may be stored and other data for other models may be obtained by modifying the fundamental models according to respective environment conditions detected.

The output device comprises a warning device **51,** auto-brake device **52,** steering device **53,** and/or pedestrian protection device **54.** According to the present embodiment, a driving assist control preferably is conducted by these devices when the pedestrian is detected and the vehicle hitting the pedestrian is predicted. The warning device **51** provides a warning sound and/or the auto-braking device **52** provides an urgent braking to avoid the hitting of the pedestrian, for example. Also, the steering device **53** preferably automatically operates for an avoidance of the pedestrian hitting. When the pedestrian hitting is predicted, the pedestrian protection device **54** preferably operates to activate protection mechanisms for the pedestrian (such as inflate one or more airbags on an engine hood and/or a windshield and/or raise the engine hood in view of reducing the hitting forces acting on the pedestrian) to reduce a damage of the pedestrian that may be caused by the hitting.

The CPU **6** conducts an area-candidate extracting processing to extract the area candidate that contains the pedestrian image from the far-infrared image picked up by the far-infrared camera **1,** a pedestrian-model extracting processing to extract the pedestrian model from the stored data of the pedestrian model in the RAM **4** that is associated with the environment outside the vehicle detected by the environment detecting device **3,** and a pedestrian determining processing to determine, for the pedestrian detection, whether or not the area candidate contains the pedestrian image, by comparing the area candidate extracted to the pedestrian model extracted. The above-described proceeding are shown in FIG. **1****,** for convenience, by three function blocks of an area-candidate extracting portion **61** (as a preferred area-candidate extracting device), a pedestrian-model extracting portion **62** (as a preferred pedestrian-model extracting device), and a pedestrian determining portion **63** (as a preferred pedestrian determining device) of the CPU **6.**

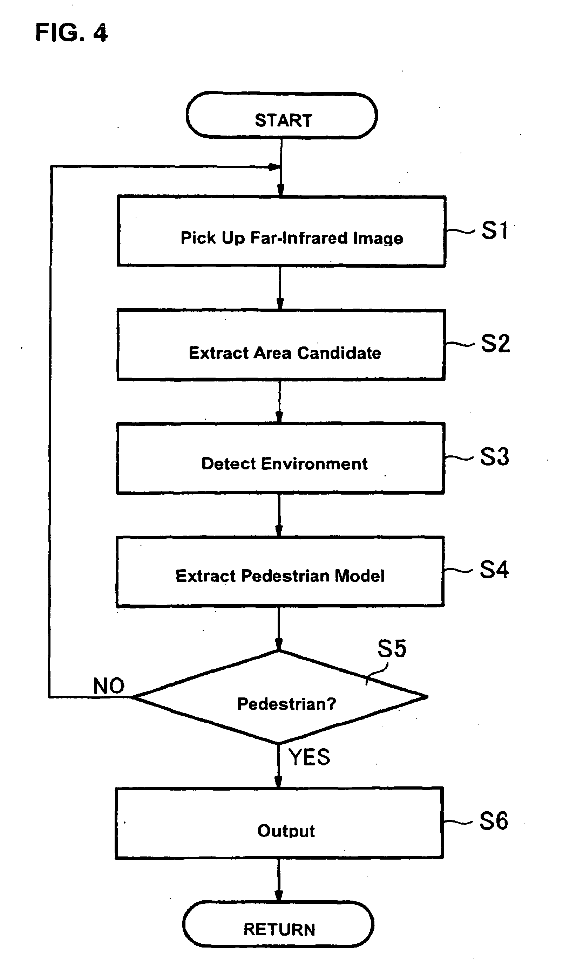

Next, the operation of the pedestrian detecting device for a vehicle according to the present embodiment will be described referring to a flowchart of FIG. **4.** FIG. **4** just shows one example of control processing, and the order of a far-infrared image pickup processing **(S1)** and an area-candidate extracting processing **(S2)** with respect to an environment detecting processing **(S3)** and a pedestrian-model extracting processing **(S4)** may be changed, or these processing may be executed in parallel. Also, the far-infrared image pickup processing **(S1)** may be executed substantially continuously, while the environment detecting processing **(S3)** may be executed periodically or under specified (predetermined or predeterminable) conditions.

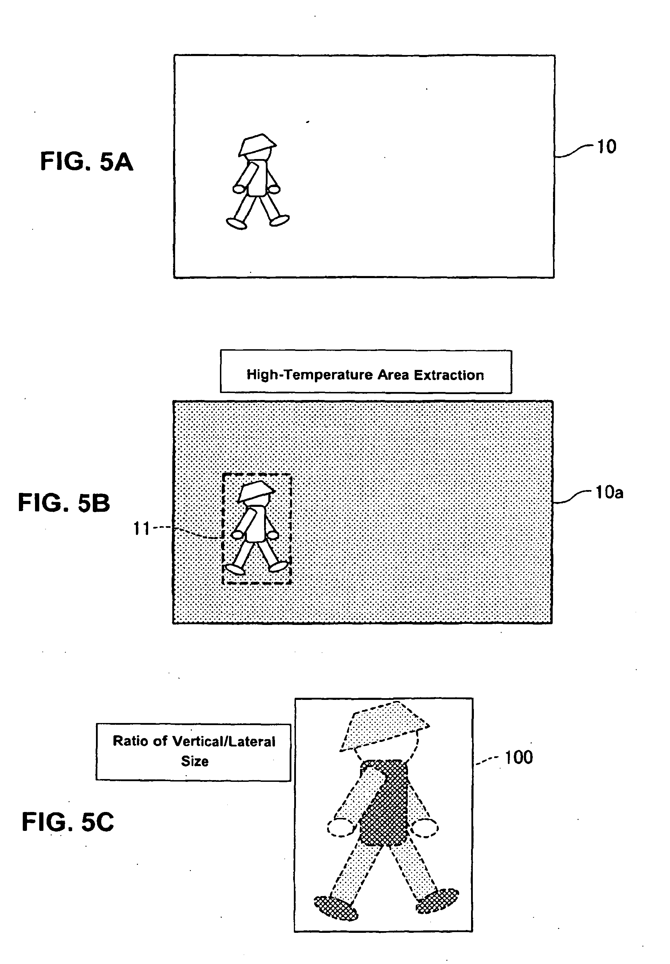

In the present embodiment, at first, a far-infrared image of an area outside the vehicle is picked up by the far-infrared camera **1 (S1).** The picked-up far-infrared image **10** is shown in FIG. **5A****.** In FIG. **5A****,** an illustration of background images other than the pedestrian's image is omitted for convenience.

Subsequently, the area candidate that may possibly contains the pedestrian image is extracted or determined from the picked-up far-infrared image by the area-candidate extracting or determining portion **61** of the CPU **6 (S2).** Herein, preferably firstly the far-infrared image **10** is processed as shown in FIG. **5B** so that a light area (high-temperature area) **11** can be extracted. In general, other objects than pedestrians, such as a mail post, may be also detected as an image of this light area (high-temperature area).

Therefore, according to the present embodiment, as shown in FIG. **5C****,** a particular area that highly possibly contains the pedestrian image is extracted or determined by using more specific determining factors, such as a ratio of the vertical length to the lateral length of the image and/or a size of an extracted area. Thus, this particular area can be extracted or determined as an area candidate **100.**

Further, any environment outside the vehicle that influences the far-infrared image picked up is detected by the environment detecting device **3 (S3).** In the present embodiment, specifically, the season is detected by the electric calendar **34** in the car navigation system (not illustrated), the temperature outside the vehicle is detected by the temperature sensor **31,** the luminous intensity of sunshine is detected by the sunshine luminous intensity sensor **32,** and/or the time is detected by the clock **33.**

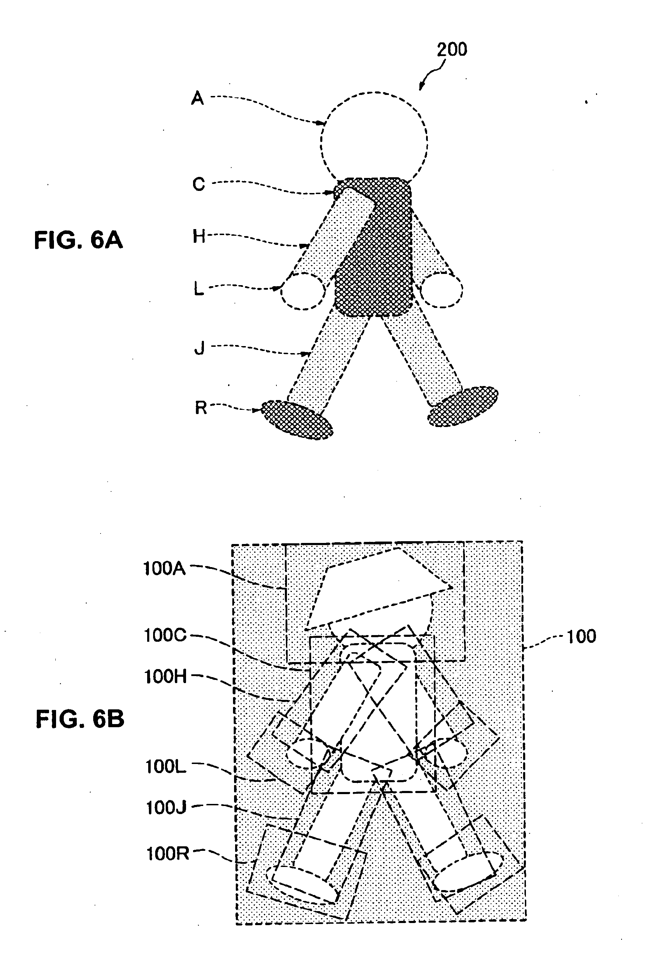

Then, a specified (predetermined or predeterminable) pedestrian model that is associated with the environment outside the vehicle detected by the environment detecting device **3 (31** to **34)** is extracted or retrieved from the stored data of the pedestrian model stored in the ROM **4** by the pedestrian-model extracting or retrieving portion **62** of the CPU **6 (S4).** Herein, the pedestrian model is comprised of plural parts of the model, and the average of the light and shade (the intensity of far-infrared rays) and/or the distribution of the light and shade (the intensity or intensity distribution of far-infrared rays) that are respectively associated with or correspond to the environment outside the vehicle detected, such as the season **A1,** temperature **B1,** sunshine luminous intensity **C1** and/or time **D1,** are used with respect to the each part pedestrian model. A pedestrian model 200 that preferably is comprised of a head model **A,** torso model **C,** arm model **H,** hand model **L,** leg model **J** and foot model **R** is schematically shown in FIG. **6A****.**

Then, a pedestrian detection is conducted by the pedestrian determining portion **63** that determines whether or not the area candidate **100** contains the pedestrian image, by comparing the area candidate **100** extracted or determined by the area-candidate extracting portion **62** to the pedestrian model **200** extracted or determined by the pedestrian-model extracting portion **61 (S5).**

Herein, as shown in FIG. **6B****,** plural area candidates are defined based on a relative position in the pedestrian and each of the area candidates is further extracted from the area candidate **100.** In the example of FIG. **6B****,** a head area candidate **100A,** torso area candidate **100C,** arm area candidate **100H,** hand area candidate **100L,** leg area candidate **100J** and foot area candidate **100R** are extracted or determined from the whole area candidate **100.**

Then, the matching for each of the part models of the pedestrian model and the area candidates are conducted by the pedestrian determining portion **63.** Specifically, the matching of the head model **A** and the head area candidate **100A,**
the matching of the torso model **C** and the torso area candidate **100C,** the matching of the arm model **H** and the arm area candidate **100H,** the matching of the hand model **L** and the hand area candidate 100L, the matching of the leg model **J** and the hand area candidate **100L,** and the foot model **R** and the foot area candidate **100 R** are conducted.

Herein, the pedestrian determining portion **63** of the CPU **6** obtains the intensity average and the intensity distribution of the far-infrared rays for each of the area candidate, and conducts a matching determination for each of the part models of the pedestrian model with respect to the intensity average and the intensity distribution of the far-infrared rays by comparing these related obtained data to these related stored data. The final determination of the pedestrian image is made based on results of these all matching.

When the pedestrian image is determined, the output device **5** is operated for the driving assistance, especially in a case where the vehicle hitting the pedestrian is predicted **(S6).**

Accordingly, a pedestrian detecting device for a vehicle comprises a far-infrared camera **1** picking up a long wavelength IR or far-infrared image outside the vehicle, an area-candidate extracting or determining portion **61** of a CPU **6** that extracts or determines an area candidate containing a pedestrian image from the long wavelength IR or far-infrared image picked up, an environment detecting device **3** detecting an environment outside the vehicle that influences the long wavelength IR or far-infrared image, a ROM **4** storing a pedestrian model in the long wavelength IR or far-infrared image in association with the environment outside the vehicle, a pedestrian-model extracting portion **62** extracting a pedestrian model associated with the environment that is detected by the environment detecting device **3** from the ROM **4,** and a pedestrian determining portion **63** determining, for a pedestrian detection, whether or not the area candidate contains the pedestrian image, by comparing the area candidate extracted to the pedestrian model extracted. Accordingly, the detection accuracy of the pedestrian can be improved.

### EMBODIMENT 2

A second preferred embodiment will be described. It has been recently proposed from products management control standpoints that an IC tag is sewed on clothes. Accordingly, a signal transmitted by the IC tag of the clothes preferably may be used for the pedestrian detection according to the second embodiment. The signal of the IC tag contains codes to identify a material or shape of clothes, for example. Thereby, the material and the like of the clothes that the pedestrian puts on can be identified by receiving the signal of the IC tag. Since an energy or a spectrum distribution of the heat radiation from objects change depending on not only the temperature of the objects but the kinds of the objects, the identification of the material of clothes by the IC tag signal can improve the accuracy of the pedestrian detection with the far-infrared image.

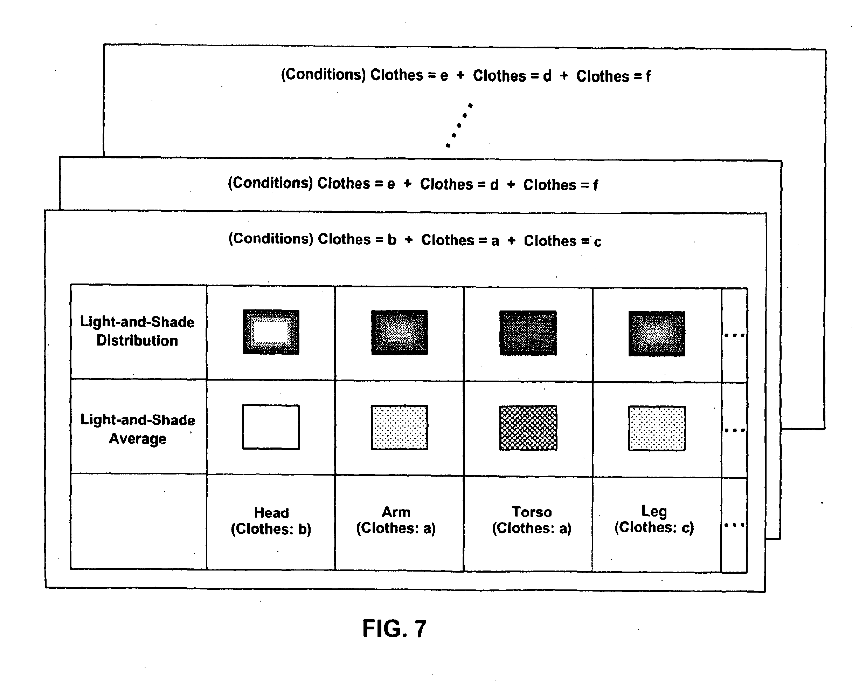

The structure of the pedestrian detecting device for a vehicle of the second embodiment is similar or substantially the same as that showed in FIG. **1****,** and the pedestrian detection processing is similar or substantially the same as the flowchart of FIG. **4****.** According to the second embodiment, however, the ROM **4** stores the pedestrian model in the long wavelength IR or far-infrared image in association with the signal of the IC tag as shown in FIG. **7****.**

In the example shown in FIG. **7****,** data of the average intensity of far-infrared rays and the distribution of intensity of long wavelength IR or far-infrared rays for (preferably each) part of the pedestrian model, such as the head, arm, torso, leg, are stored in association with clothes with the IC tag that comprises a hat **b,** jacket **b,** and pants **c,** for example.

An IC tag receiver **35** transmits an operational signal forward of the vehicle and receives a signal that is transmitted by the IC tag that is put on clothes of the pedestrian as the environment outside the vehicle **(S3** of FIG. **4****).** The pedestrian-model extracting portion **62** of the CPU **6** extracts a part model putting on the clothes that is associated with the IC tag signal received is extracted from the ROM **4,** and creates the pedestrian model in the long wavelength IR or far-infrared image in the similar or substantially same ways as the first embodiment **(S4).** Thereby, the pedestrian can be detected, like in the first embodiment.

Herein, although the pedestrian can be detected just by using the IC tag signal, a more accurate location of the pedestrian can be detected by detecting the pedestrian from the far-infrared image. Further, combining the IC tag signal and other environment outside the vehicle, such as the season or the sunshine luminous intensity, can improve the detection accuracy of the pedestrian.

Further, by providing the visible camera **2** picking up a visible image outside the vehicle, and by making the pedestrian determining portion **63** detect the pedestrian with the visible image picked up by the visible camera **2** in addition to the far-infrared image, the detection accuracy of the pedestrian can be further improved.

The present invention should not be limited to the above-described embodiments, and any other modifications and combinations may be applied.

## Claims

1. A pedestrian detecting device for a vehicle **(7),** which is to be installed in the vehicle **(7)**, comprising:
an image pickup device **(1)** to pick up a long wavelength IR and/or far-infrared image outside the vehicle **(7)**;
an environment detecting device **(3)** to detect at least part of an environment outside the vehicle **(7)** that influences the long wavelength IR and/or far-infrared image picked up by the image pickup device **(1);**
a pedestrian-model storing device **(4)** to store data of a pedestrian model in the long wavelength IR and/or far-infrared image to be picked up by the image pickup device **(1)** in association with the environment outside the vehicle **(7)** to be detected by the environment detecting device **(3);**
an area-candidate extracting device **(61)** to extract or determine a candidate of an area that contains a pedestrian image from the long wavelength IR and/or far-infrared image picked up by the image pickup device **(1);**
a pedestrian-model extracting device **(62)** to extract or determine a specified pedestrian model from the stored data of the pedestrian model that is stored in the pedestrian-model storing device **(4),** the specified pedestrian model being associated with the environment outside the vehicle **(7)** that is detected by the environment detecting device **(3)**; and
a pedestrian determining device **(63)** to determine, for a pedestrian detection, whether or not the area candidate contains the pedestrian image, by comparing the area candidate extracted or determined by the area-candidate extracting device **(61)** to the pedestrian model extracted or determined by the pedestrian-model extracting device **(62)**,
wherein the pedestrian model of the data stored by said pedestrian-model storing device **(4)** comprises plural part models that are defined by a relative position, and said determination by the pedestrian determining device **(63)** is conducted based on matching for each of the part models of the pedestrian model.

2. The pedestrian detecting device for a vehicle of claim 1, wherein said environment detecting device **(3)** detects at least one of a season, temperature, luminous intensity of sunshine, and sunshine time as the environment outside the vehicle.

3. The pedestrian detecting device for a vehicle **(7)** of claim 1 or 2, wherein said pedestrian-model storing device **(4)** stores data of an average intensity of long wavelength IR and/or far-infrared rays for each part of the pedestrian model, and said determination by the pedestrian determining device **(63)** is conducted based on matching of each part model of the pedestrian with respect to the average intensity of long wavelength IR and/or far-infrared rays of each of part models.

4. The pedestrian detecting device for a vehicle **(7)** of any one of claims 1 through 3, wherein said pedestrian-model storing device **(4)** stores data of a distribution of intensity of long wavelength IR and/or far-infrared rays for each part of the pedestrian model, and said determination by the pedestrian determining device **(63)** is conducted based on matching of each part model of the pedestrian with respect to the intensity distribution of long wavelength IR and/or far-infrared rays of each of part models.

5. The pedestrian detecting device for a vehicle **(7)** of any one of claims 1 through 4, wherein said environment detecting device **(3)** detects a signal transmitted by an IC tag that is put on clothes of a pedestrian as the environment outside the vehicle **(7)**, said pedestrian-model storing device **(4)** stores data of the pedestrian model in the long wavelength IR and/or far-infrared image in association with the signal of the IC tag, and said pedestrian-model extracting device **(62)** extracts a specified pedestrian model associated with the signal of the IC tag detected by the environment detecting device **(3)** from the stored data of the pedestrian model stored in the pedestrian-model storing device **(4).**

6. The pedestrian detecting device for a vehicle of any one of claims 1 through 5, wherein there is further provided a visible-image pickup device **(2)** to pick up a visible image outside the vehicle, and said pedestrian determining device **(63)** conducts a pedestrian detection based on the visible image for said area candidate.

7. A pedestrian detecting method for a vehicle **(7),** comprising the following steps:
picking up a long wavelength IR and/or far-infrared image outside the vehicle **(7)**;
detecting at least part of an environment outside the vehicle **(7)** that influences the long wavelength IR and/or far-infrared image picked up in the image pickup step;
extracting or determining a candidate of an area that contains a pedestrian image from the long wavelength IR and/or far-infrared image picked in the image pickup step;
extracting or determining a specified pedestrian model from stored data of a pedestrian model that is stored in a pedestrian-model storing device **(4),** the specified pedestrian model being associated with the environment outside the vehicle **(7)** that is detected in the environment detecting step; and
determining, for a pedestrian detection, whether or not the area candidate contains the pedestrian image, by comparing the area candidate extracted or determined in the area-candidate extracting step to the pedestrian model extracted or determined in the pedestrian-model extracting step,
wherein the pedestrian model of the data stored by said pedestrian-model storing device **(4)** comprises plural part models that are defined by a relative position, and said step of determining whether or not the area candidate contains the pedestrian image is conducted based on matching for each of the part models of the pedestrian model.

8. The pedestrian detecting method for a vehicle of claim 7, wherein in said environment detecting step at least one of a season, temperature, luminous intensity of sunshine, and sunshine time as the environment outside the vehicle **(7)** is detected.

9. A computer program product comprising computer-readable instructions which, when loaded and executed on a suitable system execute the steps of a pedestrian detecting method for a vehicle of claim 6 or 7.

## Patentansprüche

1. Vorrichtung zur Fußgängererfassung für ein Fahrzeug (7), die in dem Fahrzeug (7) installiert werden soll, die umfasst:
eine Bildaufnahmevorrichtung (1), um ein Langwellen-IR- und/oder fernes Infrarotbild außerhalb des Fahrzeugs (7) aufzunehmen;
eine Umgebungserfassungsvorrichtung (3), um wenigstens einen Teil einer Umgebung außerhalb des Fahrzeugs (7) zu erfassen, der das von der Bildaufnahmevorrichtung (1) erfasste Langwellen-IR- und/oder ferne Infrarotbild beeinflusst;
eine Fußgängermodell-Speichervorrichtung (4) zum Speichern von Daten eines Fußgängermodells in dem Langwellen-IR- und/oder fernen Infrarotbild, das von der Bildaufnahmevorrichtung (1) erfasst werden soll, in Verbindung mit der Umgebung außerhalb des Fahrzeugs (7), die von einer Umgebungserfassungsvorrichtung (3) erfasst werden soll;
eine Bereichskandidaten-Extraktionsvorrichtung (61) zum Extrahieren oder Bestimmen eines Kandidaten für einen Bereich, der ein Fußgängerbild enthält, aus dem Langwellen-IR- und/oder fernen Infrarotbild, das von der Bildaufnahmevorrichtung (1) aufgenommen wird;
eine Fußgängermodell-Extraktionsvorrichtung (62) zum Extrahieren oder Bestimmen eines bestimmten Fußgängermodells aus den gespeicherten Daten des Fußgängermodells, das in der Fußgängermodell-Speichervorrichtung (4) gespeichert ist, wobei das bestimmte Fußgängermodell mit der Umgebung außerhalb des Fahrzeugs (7), die von der Umgebungserfassungsvorrichtung (3) erfasst wird, verbunden wird; und
eine Fußgängerbestimmungsvorrichtung (63), um für eine Fußgängererfassung zu bestimmen, ob der Bereichskandidat das Fußgängerbild enthält oder nicht, indem der Bereichskandidat, der von der Bereichskandidaten-Extraktionsvorrichtung (61) extrahiert oder bestimmt wird, mit dem Fußgängermodell verglichen wird, das von der Fußgängermodell-Extraktionsvorrichtung (62) extrahiert oder bestimmt wird,
wobei das Fußgängermodell der von der Fußgängermodell-Speichervorrichtung (4) gespeicherten Daten mehrere Teilmodelle umfasst, die durch eine relative Position definiert sind, und die Bestimmung durch die Fußgängerbestimmungsvorrichtung (63) basierend auf dem Abgleich für jedes der Teilmodelle des Fußgängermodells vorgenommen wird.

2. Vorrichtung zur Fußgängererfassung für ein Fahrzeug nach Anspruch 1, wobei die Umgebungserfassungsvorrichtung (3) eine Jahreszeit und/oder eine Temperatur und/oder eine Leuchtintensität des Sonnenscheins und/oder eine Sonnenscheindauer als die Umgebung außerhalb des Fahrzeugs erfasst.

3. Vorrichtung zur Fußgängererfassung für ein Fahrzeug (7) nach Anspruch 1 oder 2, wobei die Fußgängermodell-Speichervorrichtung (4) Daten einer mittleren Intensität von Langwellen-IR- und/oder fernen Infrarotstrahlen für jeden Teil des Fußgängermodells speichert, und die Bestimmung durch die Fußgängerbestimmungsvorrichtung (63) basierend auf dem Abgleich jedes Teilmodells des Fußgängers in Bezug auf die mittlere Intensität der Langwellen-IR- und/oder fernen Infrarotstrahlen jedes Teilmodells vorgenommen wird.

4. Vorrichtung zur Fußgängererfassung für ein Fahrzeug (7) nach einem der Ansprüche 1 bis 3, wobei die Fußgängermodell-Speichervorrichtung (4) Daten einer Intensitätsverteilung von Langwellen-IR- und/oder fernen Infrarotstrahlen für jeden Teil des Fußgängermodells speichert, und die Bestimmung durch die Fußgängerbestimmungsvorrichtung (63) basierend auf dem Abgleich jedes Teilmodells des Fußgängers in Bezug auf die Intensitätsverteilung der Langwellen-IR- und/oder fernen Infrarotstrahlen jedes Teilmodells vorgenommen wird.

5. Vorrichtung zur Fußgängererfassung für ein Fahrzeug (7) nach einem der Ansprüche 1 bis 4, wobei die Umgebungserfassungsvorrichtung (3) ein Signal, das von einem IC-Etikett gesendet wird, das auf die Kleidung eines Fußgängers aufgesteckt wird, als die Umgebung außerhalb des Fahrzeugs (7) erfasst, wobei die Fußgängermodell-Speichervorrichtung (4) Daten des Fußgängermodells in dem Langwellen-IR- und/oder fernen Infrarotbild in Verbindung mit dem Signal des IC-Etiketts speichert und die Fußgängermodell-Extraktionsvorrichtung (62) ein bestimmtes Fußgängermodell, das mit dem von der Umgebungserfassungsvorrichtung (3) erfassten Signal des IC-Etiketts verbunden ist, aus den gespeicherten Daten des in der Fußgängermodell-Speichervorrichtung (4) gespeicherten Fußgängermodells extrahiert.

6. Vorrichtung zur Fußgängererfassung für ein Fahrzeug nach einem der Ansprüche 1 bis 5, wobei ferner eine Aufnahmevorrichtung (2) für ein sichtbares Bild bereitgestellt wird, um ein sichtbares Bild außerhalb des Fahrzeugs bereitzustellen, und die Fußgängerbestimmungsvorrichtung (63) basierend auf dem sichtbaren Bild für den Bereichskandidaten eine Fußgängererfassung ausführt.

7. Verfahren zur Fußgängererfassung für ein Fahrzeug (7), das die folgenden Schritte umfasst:
Aufnehmen eines Langwellen-IR- und/oder ein fernen Infrarotbilds außerhalb des Fahrzeugs (7);
Erfassen wenigstens eines Teils einer Umgebung außerhalb des Fahrzeugs (7), der das in dem Bildaufnahmeschritt erfasste Langwellen-IR- und/oder ferne Infrarotbild beeinflusst;
Extrahieren oder Bestimmen eines Kandidaten für einen Bereich, der ein Fußgängerbild enthält, aus dem Langwellen-IR- und/oder fernen Infrarotbild, das von dem Bildaufnahmeschritt aufgenommen wird;
Extrahieren oder Bestimmen eines bestimmten Fußgängermodells aus gespeicherten Daten eines Fußgängermodells, das in einer Fußgängermodell-Speichervorrichtung (4) gespeichert ist, wobei das bestimmte Fußgängermodell mit der Umgebung außerhalb des Fahrzeugs (7), die in dem Umgebungserfassungsschritt erfasst wird, verbunden wird; und
für eine Fußgängererfassung Bestimmen, ob der Bereichskandidat das Fußgängermodell enthält oder nicht, indem der in dem Bereichskandidaten-Extraktionsschritt extrahierte oder bestimmte Bereichskandidat mit dem in dem Fußgängermodell-Extraktionsschritt extrahierten oder bestimmten Fußgängermodell verglichen wird;
wobei das Fußgängermodell der von der Fußgängermodell-Speichervorrichtung (4) gespeicherten Daten mehrere Teilmodelle umfasst, die durch eine relative Position definiert sind, und der Bestimmungsschritt, ob der Bereichskandidat das Fußgängerbild enthält oder nicht, basierend auf dem Abgleich für jedes der Teilmodelle des Fußgängermodells vorgenommen wird.

8. Verfahren zur Fußgängererfassung für ein Fahrzeug nach Anspruch 7, wobei in dem Umgebungserfassungsschritt eine Jahreszeit und/oder eine Temperatur und/oder eine Leuchtintensität des Sonnenscheins und/oder eine Sonnenscheindauer als die Umgebung außerhalb des Fahrzeugs (7) erfasst wird/werden.

9. Computerprogrammprodukt, das computerlesbare Anweisungen umfasst, die wenn sie auf ein passendes System geladen und ausgeführt werden, die Schritte eines Verfahrens zur Fußgängererfassung für ein Fahrzeug nach Anspruch 6 oder 7 ausführen.

## Revendications

1. Dispositif de détection d'un piéton pour un véhicule automobile (7), lequel doit être installé dans le véhicule automobile (7), comprenant :
un dispositif de captage d'images (1) pour capter une image à longueur d'onde IR longue et/ou une image infrarouge lointaine en dehors du véhicule automobile (7) ;
un dispositif de détection d'environnement (3) pour détecter au moins une partie d'un environnement en dehors du véhicule automobile (7) qui influence sur l'image à longueur d'onde IR longue et/ou sur l'image infrarouge lointaine captée par le dispositif de captage d'images (1)
un dispositif de mémorisation de modèles de piéton (4) pour mémoriser des données d'un modèle de piéton dans l'image à longueur d'onde IR longue et/ou dans l'image infrarouge lointaine captée par le dispositif de captage d'images (1) en association avec l'environnement en dehors du véhicule automobile (7) qui doit être détecté par le dispositif de détection d'environnement (3) ;
un dispositif d'extraction de candidat dans une zone (61) pour extraire ou déterminer un candidat d'une zone qui contient une image de piéton à partir de l'image à longueur d'onde IR longue et/ou de l'image infrarouge lointaine captée par le dispositif de captage d'images (1) ;
un dispositif d'extraction de modèle de piéton (62) pour extraire ou déterminer un modèle de piéton spécifié depuis les données de modèles de piéton mémorisées, lequel est mémorisé dans le dispositif de mémorisation de modèles de piéton (4), le modèle de piéton spécifié étant associé à l'environnement en dehors du véhicule automobile (7) qui est détecté par le dispositif de détection d'environnement (3) ; et
un dispositif de détermination de piéton (63) pour déterminer, dans le but d'une détection de piéton, si la zone de candidat contient ou non l'image de piéton, en comparant la zone de candidat extraite ou déterminée par le dispositif d'extraction de candidat dans une zone (61) au modèle de piéton extrait ou déterminé par le dispositif d'extraction de modèle de piéton (62),
dans lequel le modèle de piéton des données mémorisées par ledit dispositif de mémorisation de modèles de piéton (4) comprend une pluralité de modèles partiels qui sont définis par une position relative et dans lequel ladite détermination par le dispositif de détermination de piéton (63) est réalisée sur la base de la concordance pour chacun des modèles partiels du modèle de piéton.

2. Dispositif de détection d'un piéton pour un véhicule automobile selon la revendication 1, dans lequel ledit dispositif de détection d'environnement (3) détecte au moins un paramètre parmi une saison, une température, une intensité lumineuse de la lumière solaire et un moment de lumière solaire comme l'environnement en dehors du véhicule automobile.

3. Dispositif de détection d'un piéton pour un véhicule automobile (7) selon l'une ou l'autre des revendications 1 et 2, dans lequel ledit dispositif de mémorisation de modèles de piéton (4) mémorise des données d'une intensité moyenne de rayons à longueur d'onde IR longue et/ou de rayons infrarouges lointains pour chaque partie du modèle de piéton, et dans lequel ladite détermination par le dispositif de détermination de piéton (63) est réalisée sur la base de la concordance de chaque modèle partiel du piéton en tenant compte de la répartition de l'intensité des rayons à longueur d'onde IR longue et/ou des rayons infrarouges lointains de chacun des modèles partiels.

4. Dispositif de détection d'un piéton pour un véhicule automobile (7) selon l'une quelconque des revendications 1 à 3, dans lequel ledit dispositif de mémorisation de modèles de piéton (4) mémorise des données d'une répartition d'intensité des rayons à longueur d'onde IR longue et/ou des rayons infrarouges lointains pour chaque partie du modèle de piéton, et dans lequel ladite détermination par le dispositif de détermination de piéton (63) est réalisée sur la base de la concordance de chaque modèle partiel du piéton en tenant compte de la répartition de l'intensité des rayons à longueur d'onde IR longue et/ou des rayons infrarouges lointains de chacun des modèles partiels.

5. Dispositif de détection d'un piéton pour un véhicule automobile (7) selon l'une quelconque des revendications 1 à 4, dans lequel ledit dispositif de détection d'environnement (3) détecte un signal transmis par un repère de circuit intégré (IC) qui est placé sur des vêtements d'un piéton comme l'environnement en dehors du véhicule automobile (7), dans lequel ledit dispositif de mémorisation de modèles de piéton (4) mémorise des données du modèle de piéton dans l'image à longueur d'onde IR longue et/ou dans l'image infrarouge lointaine en association avec le signal du repère de circuit intégré (IC), et dans lequel ledit dispositif d'extraction de modèle de piéton (62) extrait un modèle de piéton spécifié associé au signal du repère de circuit intégré (IC) détecté par le dispositif de détection d'environnement (3) depuis les données mémorisées du modèle de piéton mémorisé dans le dispositif de mémorisation de modèles de piéton (4).

6. Dispositif de détection d'un piéton pour un véhicule automobile selon l'une quelconque des revendications 1 à 5, dans lequel un dispositif de captage d'image visible (2) est en outre prévu pour capter une image visible en dehors du véhicule automobile, et dans lequel ledit dispositif de détermination de piéton (63) réalise une détection de piéton sur la base de l'image visible pour ledit candidat dans la zone.

7. Procédé de détection d'un piéton pour un véhicule automobile (7), comprenant les étapes suivantes :
le captage d'une image à longueur d'onde IR longue et/ou d'une image infrarouge lointaine en dehors du véhicule automobile (7) ;
la détection d'au moins une partie d'un environnement en dehors du véhicule automobile (7) qui influence sur l'image à longueur d'onde IR longue et/ou sur l'image infrarouge lointaine captée dans l'étape de captage d' images ;
l'extraction ou la détermination d'un candidat d'une zone qui contient une image de piéton à partir de l'image à longueur d'onde IR longue et/ou de l'image infrarouge lointaine captée dans l'étape de captage d' images ;
l'extraction ou la détermination d'un modèle de piéton spécifié depuis des données d'un modèle de piéton mémorisées, lequel est mémorisé dans un dispositif de mémorisation de modèles de piéton (4), le modèle de piéton spécifié étant associé à l'environnement en dehors du véhicule automobile (7) qui est détecté dans l'étape de détection d' environnement ; et
la détermination, dans le but d'une détection de piéton, si la zone de candidat contient ou non l'image de piéton, en comparant la zone de candidat extraite ou déterminée dans l'étape d'extraction de candidat dans une zone au modèle de piéton extrait ou déterminé dans l'étape d'extraction de modèle de piéton,
dans lequel le modèle de piéton des données mémorisées par ledit dispositif de mémorisation de modèles de piéton (4) comprend une pluralité de modèles partiels qui sont définis par une position relative et dans lequel ladite étape détermination si la zone de candidat contient ou non l'image de piéton est réalisée sur la base de la concordance pour chacun des modèles partiels du modèle de piéton.

8. Procédé de détection d'un piéton pour un véhicule automobile selon la revendication 7, dans lequel au moins un paramètre parmi une saison, une température, une intensité lumineuse de la lumière solaire et un moment de lumière solaire comme l'environnement en dehors du véhicule automobile (7) est détecté dans ladite étape de détection d'environnement.

9. Produit de programme d'ordinateur comprenant des instructions lisibles par un ordinateur et qui, lorsqu'elles sont chargées et exécutées sur un système approprié, exécutent les étapes d'un procédé de détection d'un piéton pour un véhicule automobile selon l'une ou l'autre des revendications 6 et 7.
